# EUROPÄISCHE PATENTSCHRIFT

(11) **EP 4 060 459 B1**
(45) Veröffentlichungstag und Bekanntmachung des Hinweises auf die Patenterteilung: **28.05.2025**
(21) Anmeldenummer: 21212707.0
(22) Anmeldetag: 07.12.2021
(51) Int. Cl.: G06F 3/01, B25J 9/16, G06F 3/023, G06F 3/0354, G06F 3/038

(54) **VERFAHREN ZUM BETREIBEN EINES ROBOTERARMS**
METHOD FOR OPERATING A ROBOT ARM
PROCÉDÉ DE FONCTIONNEMENT D'UN BRAS ROBOTIQUE

(30) Priorität: 15.03.2021 DE 102021106251
(43) Veröffentlichungstag der Anmeldung: 21.09.2022
(73) Patentinhaber: Deutsches Zentrum für Luft- und Raumfahrt e.V., 53227 Bonn (DE)
(72) Erfinder: Iskandar, Maged, 82205 Gilching (DE); Dietrich, Alexander, 85716 Unterschleißheim (DE)
(74) Vertreter: dompatent von Kreisler Selting Werner - Partnerschaft von Patent- und Rechtsanwälten mbB

(56) Entgegenhaltungen:
- US-A1- 2018 361 594
- RYOSUKE HANYU ET AL: "Command recognition based on haptic information for a robot arm", INTELLIGENT ROBOTS AND SYSTEMS (IROS), 2010 IEEE/RSJ INTERNATIONAL CONFERENCE ON, IEEE, PISCATAWAY, NJ, USA, 18 October 2010 (2010-10-18), pages 4662 - 4667, XP031811843, ISBN: 978-1-4244-6674-0
- KUBUS DANIEL ET AL: "Robust recognition of tactile gestures for intuitive robot programming and control", 2017 IEEE/RSJ INTERNATIONAL CONFERENCE ON INTELLIGENT ROBOTS AND SYSTEMS (IROS), IEEE, 24 September 2017 (2017-09-24), pages 1643 - 1650, XP033266125, DOI: 10.1109/IROS.2017.8205974

## Beschreibung

Die Erfindung betrifft ein Verfahren zum Betreiben eines Roboterarms.

Aus dem Stand der Technik sind verschiedene Verfahren zum Steuern beziehungsweise Erzeugen von Eingabebefehlen für einen Roboterarm bekannt. Beispielsweise ist es bekannt, einen taktilen Sensor zu verwenden, um Gestenbefehle auf der Roboterstruktur zu erfassen. Weiterhin ist die Verwendung von Kraftsensoren zum Erfassen von Eingabebefehlen bei Roboterarmen bekannt.

Informationen zum Stand der Technik können den folgenden Veröffentlichungen entnommen werden:
[1] Tenebaum, J.B., De Silva, V. and Langford, J.C., 2000. A global geometric framework for nonlinear dimensionality reduction. science, 290(5500), pp.2319-232
[2] Carbune, V., Gonnet, P., Deselaers, T., Rowley, H.A., Daryin, A., Calvo, M., Wang, L.L., Keysers, D., Feuz, S. and Gervais, P., 2020. Fast multi-language LSTM-based online handwriting recognition. International Journal on Document Analysis and Recognition (IJDAR), pp.1-14.
[3] https://ai.googleblog.com/2019/03/rnn-based-handwriting-recognition-in.html
[4] Kubus, D., Muxfeldt, A., Kissener, K., Haus, J. and Steil, J., 2017, September. Robust recognition of tactile gestures for intuitive robot programming and control. In 2017 IEEE/RSJ International Conference on Intelligent Robots and Systems (IROS) (pp. 1643-1650). IEEE.
[5] Hanyu, R., Tsuji, T. and Abe, S., 2010, October. Command recognition based on haptic information for a robot arm. In 2010 IEEE/RSJ International Conference on Intelligent Robots and Systems (pp. 4662-4667). IEEE.
[6] DE 10 2020 102 160 A1
[7] DE 10 2020 134 260 A1

Aufgabe der Erfindung ist es, ein vereinfachtes Verfahren zum Betreiben eines Roboterarms und insbesondere für die Eingabe eines Eingabebefehls bereitzustellen.

Die Lösung der Aufgabe erfolgt erfindungsgemäß durch die Merkmale des Anspruchs 1.

Das erfindungsgemäße Verfahren zum Betreiben eines Roboterarms umfasst die folgenden Schritte:
Erfassen einer Eingabe eines Nutzers, die dieser in Form eines Symbols auf die Oberfläche des Roboterarms aufbringt, durch die folgenden Schritte:
Erfassen einer Kraft und/ oder eines Drehmoments in mindestens einem Gelenk durch Kraft- und/ oder Drehmomentsensoren, die ohnehin in dem Robotergelenk vorhanden sind, wobei die Kraft und/ oder das Drehmoment durch die Eingabe des Nutzers hervorgerufen wird Ableiten einer Trajektorie des Berührungspunktes auf der dreidimensionalen Oberfläche des Roboterarms
Überführen der dreidimensionalen Trajektorie des Berührungspunktes in eine zweidimensionale Trajektorie
Ableiten eines Symbols aus der zweidimensionalen Trajektorie
Ableiten eines Eingabebefehls für den Roboterarm aus einem oder mehreren Symbolen.

Durch das erfindungsgemäße Verfahren ist es auf besonders einfache Weise möglich, einen Eingabebefehl für einen Roboterarm zu generieren. Hierzu sind keine gesonderten Eingabevorrichtungen notwendig. Es ist somit nicht notwendig, an der Roboterstruktur eine haptische Eingabevorrichtung vorzusehen. Vielmehr werden Kraft- und/ oder Drehmomentsensoren, die ohnehin in dem Robotergelenk vorhanden sind, zur Ableitung des Eingabebefehls verwendet. Hierzu können Informationen über die Struktur des Roboterarms herangezogen werden, die beispielsweise aus einem CAD-Model bekannt sein können.

Durch das erfindungsgemäße Verfahren ist es insbesondere möglich, einen Eingabebefehl für einen Roboterarm zu erzeugen, ohne dass hierfür eine ebene Eingabefläche vorgesehen werden muss. Vielmehr kann der Eingabebefehl an jeder beliebigen Stelle der Roboterstruktur eingegeben werden. Die Roboterstruktur kann an der betreffenden Stelle konvex ausgebildet sein.

Weiterhin ist es bevorzugt, dass zur Ableitung des Berührungspunktes durch einen Kraftsensor die Normalkraft, die der Nutzer auf die Eingabefläche aufbringt, erfasst wird und durch einen ersten Momentensensor im Gelenk das Drehmoment um eine Achse parallel zur Hochachse der Eingabefläche erfasst wird, das durch den Nutzer beim Eingeben des Gestenbefehls erzeugt wird.

Weiterhin wird durch einen zweiten Momentensensor im Gelenk das Drehmoment um die Querachse der Eingabefläche erfasst, das durch den Nutzer beim Eingeben des Gestenbefehls erzeugt wird. Durch diese Erfassung ist es möglich, den Punkt, an dem der Nutzer die Eingabefläche zur Erzeugung des Gestenbefehls berührt, präzise über die Zeit festzustellen.

In allen Ausführungsformen der vorliegenden Erfindung kann der Benutzer zur Eingabe des Gestenbefehls den Roboterarm mit seinem Finger oder aber mit einem beliebigen anderen Eingabegerät, beispielsweise einem Eingabestift, berühren.

Unter einer Erfassung des Berührungspunkts auf der Oberfläche des Roboterarms über die Zeit wird verstanden, dass zu verschiedenen Zeitpunkten die Position, an der der Nutzer die Eingabefläche berührt, erfasst wird, so dass es möglich ist, die Bewegung dieses Berührungspunktes auf der Eingabefläche im Verlauf der Zeit zu ermitteln.

Es ist weiterhin bevorzugt, dass beim Ableiten der Trajektorie des Berührungspunktes auf der dreidimensionalen Oberfläche die Oberflächenstruktur und/ oder die Struktur des Roboterarms berücksichtigt wird.

Weiterhin ist es bevorzugt, dass eine globale Karte der Oberfläche des Roboterarms generiert wird, die eine Abbildung der dreidimensionalen Oberfläche des Roboterarms auf eine zweidimensionale Oberfläche enthält.

Weiterhin ist es bevorzugt, dass die erfassten Kräfte und/ oder Drehmomente zum Erzeugen einer gleichmäßigeren Trajektorie gefiltert werden.

Weiterhin ist es bevorzugt, dass eine abschnittsweise Annäherung der dreidimensionalen Trajektorie unter Verwendung von Splines oder Bezier-Kurven erfolgt.

Weiterhin ist es bevorzugt, dass das Überführen der dreidimensionalen Trajektorie des Berührungspunktes in eine zweidimensionale Trajektorie eine nicht-lineare Dimensionalitäts-Reduktion und insbesondere Manifold Learning aufweist.

Weiterhin ist es bevorzugt, dass die Erkennung des Symbols unter Verwendung eines artifical neural network, insbesondere eines convolutional neural network oder eines recurrent neural network erfolgt.

Weiterhin ist es bevorzugt, dass ein erkanntes Symbol einen Gestenbefehl auslöst.

Im Folgenden werden bevorzugte Ausführungsformen der Erfindung anhand von Figuren erläutert.

Es zeigen:
- Figur 1:: Eine dreidimensionale Trajektorie
- Figur 2:: Das Überführen der dreidimensionalen Trajektorie in eine zweidimensionale Trajektorie
- Figur 3:: Das Ableiten eines Symbols aus der zweidimensionalen Trajektorie
- Figur 4:: Eine weitere Ausführungsform der vorliegenden Erfindung

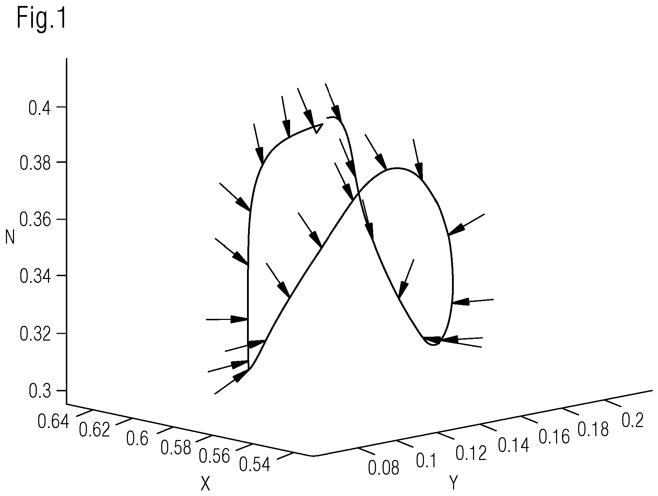

In Figur 1 ist eine dreidimensionale Trajektorie dargestellt, wobei hier das Symbol "8" auf die dreidimensionale Oberfläche des Roboterarms geschrieben wurde. In Figur 1 ist der entsprechende Kraftvektor an unterschiedlichen Positionen entlang der dreidimensionalen Trajektorie dargestellt.

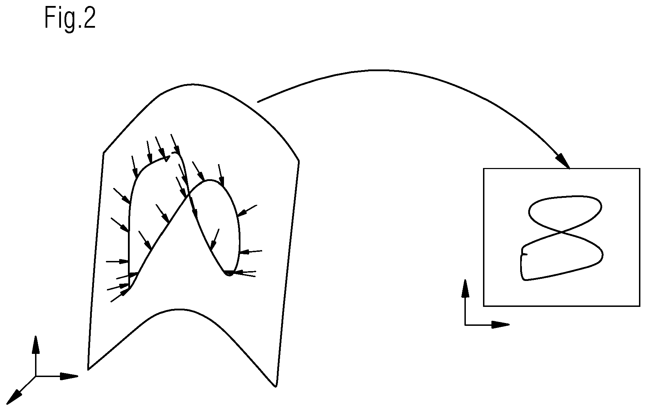

Das Überführen dieser dreidimensionalen Trajektorie in eine zweidimensionale Trajektorie ist in Figur 2 dargestellt. In der zweidimensionalen Trajektorie ist nun das Symbol "8" erkennbar.

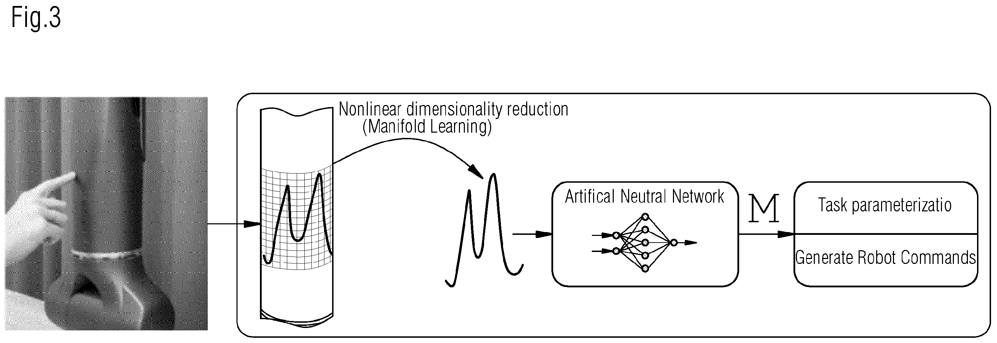

Dieses wird beispielsweise gemäß Figur 3 aus der zweidimensionalen Trajektorie abgeleitet. Es können somit unterschiedliche Layer von Machine-Learning-Verfahren verwendet werden. Der erste Layer wird verwendet, um die dreidimensionale Trajektorie des Berührungspunktes in eine zweidimensionale Trajektorie zu überführen. Der zweite Layer wird verwendet, um die handgeschriebene Trajektorie zu klassifizieren und hieraus ein Symbol abzuleiten. Zusätzlich kann ein dritter Layer verwendet werden, um basierend auf dem erkannten Symbol beziehungsweise mehreren Symbolen einen Eingabebefehl für den Roboter abzuleiten. Hierbei kann es sich um den Befehl handeln, eine bestimmte Bewegung auszuführen. Unter einem Eingabebefehl kann jedoch auch die Eingabe eines oder mehrerer Parameter für den Betrieb des Roboterarms verstanden werden.

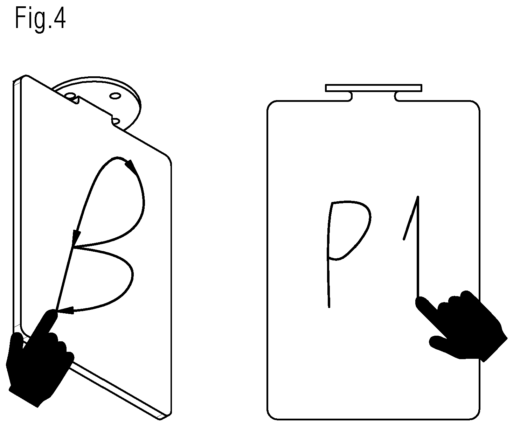

In Figur 4 ist eine weitere Ausführungsform dargestellt, die im Zusammenhang mit dem erfindungsgemäßen Verfahren verwendet werden kann. Hier ist eine Platte vorgesehen, die beispielsweise automatisiert anstelle eines Wergzeugs (zum Beispiel eines Greifers) am distalen Ende des Roboterarms befestigt werden kann. Diese Platte kann als zusätzliche Eingabefläche für die Erkennung von handschriftlichen Eingabebefehlen verwendet werden. Sie kann eine ebene Fläche oder auch eine gekrümmte Oberfläche aufweisen. In Figur 4 sind zwei beispielhafte Trajektorien dargestellt, nämlich die Symbole "B" und "P1". "P1" könnte beispielsweise ein Punkt im kartesischen Raum sein, zu dem der Roboterarm sich bewegen soll. Zur Aufnahme der Kräfte und Momente, die durch den Nutzer bei der handschriftlichen Eingabe auf dieser Eingabefläche aufgebracht werden, kann beispielsweise ein Kraft-/ Momentensensor (am TCP, Tool Center Point) des Roboterarms angebracht sein. Alternativ ist es möglich, einen Roboterarm mit Kraft/ Drehmoment - Detektionsredundanz zu verwenden. Dies gilt für sämtliche Ausführungsformen der vorliegenden Erfindung. Die Ausführungsform gemäß Figur 4 ist vorteilhaft, da die Eingabe von Befehlen ohne die Verwendung einer zusätzlichen Eingabefläche am Roboterarm möglich ist.

In einer weiteren Ausgestaltung ist es möglich, abhängig von der vom Nutzer aufgebrachten Kraft ein Symbol verschiedener Linienstärke zu detektieren. Drückt der Nutzer stärker auf die Eingabefläche, so wird die Linienstärke des Symbols vergrößert und umgekehrt.

Vorteilhaft am erfindungsgemäßen Verfahren ist ferner, dass der Nutzer Symbole nicht in einer vorgegebenen Ausrichtung eingeben muss. Vielmehr kann der Nutzer Symbole an einer beliebigen Stelle des Roboterarms in beliebiger Ausrichtung, zum Beispiel auch auf dem Kopf stehend, eingeben. Diese werden von erfindungsgemäßen Verfahren entsprechen umgerechnet und prozessiert.

## Patentansprüche

1. Verfahren zum Betreiben eines Roboterarms, mit den folgenden Verfahrensschritten:
Erfassen einer Eingabe eines Nutzers, die dieser in Form eines Symbols auf die Oberfläche des Roboterarms aufbringt, durch die folgenden Schritte:
Erfassen einer Kraft und/ oder eines Drehmoments in mindestens einem Gelenk durch Kraft- und/ oder Drehmomentsensoren, die ohnehin in dem Robotergelenk vorhanden sind, wobei die Kraft und/ oder das Drehmoment durch die Eingabe des Nutzers hervorgerufen wird
Ableiten einer Trajektorie des Berührungspunktes auf der dreidimensionalen Oberfläche des Roboterarms
Überführen der dreidimensionalen Trajektorie des Berührungspunktes in eine zweidimensionale Trajektorie
Ableiten eines Symbols aus der zweidimensionalen Trajektorie
Ableiten eines Eingabebefehls für den Roboterarm aus einem oder mehreren Symbolen.

2. Verfahren zum Betreiben eines Roboterarms nach Anspruch 1, **dadurch gekennzeichnet, dass** beim Ableiten der Trajektorie des Berührungspunktes auf der dreidimensionalen Oberfläche die Oberflächenstruktur und/ oder die Struktur des Roboterarms berücksichtigt wird.

3. Verfahren zum Betreiben eines Roboterarms nach Anspruch 1 oder 2, **dadurch gekennzeichnet, dass** eine globale Karte der Oberfläche des Roboterarms generiert wird, die eine Abbildung der dreidimensionalen Oberfläche des Roboterarms auf eine zweidimensionale Oberfläche enthält.

4. Verfahren zum Betreiben eines Roboterarms nach einem der Ansprüche 1 bis 3, **dadurch gekennzeichnet, dass** die erfassten Kräfte und/ oder Drehmomente zum Erzeugen einer gleichmäßigen Trajektorie gefiltert werden.

5. Verfahren zum Betreiben eines Roboterarms nach einem der Ansprüche 1 bis 4, **dadurch gekennzeichnet, dass** eine abschnittsweise Annäherung der dreidimensionalen Trajektorie unter Verwendung von Splines oder Bezier-Kurven erfolgt.

6. Verfahren zum Betreiben eines Roboterarms nach einem der Ansprüche 1 bis 5, **dadurch gekennzeichnet, dass** das Überführen der dreidimensionalen Trajektorie des Berührungspunktes in eine zweidimensionale Trajektorie eine nicht-lineare Dimensionalitäts-Reduktion und insbesondere Manifold Learning umfasst.

7. Verfahren zum Betreiben eines Roboterarms nach einem der Ansprüche 1 bis 6, **dadurch gekennzeichnet, dass** die Erkennung des Symbols unter Verwendung eines artifical neural network, insbesondere eines convolutional neural network oder eines recurrent neural network erfolgt.

8. Verfahren zum Betreiben eines Roboterarms nach einem der Ansprüche 1 bis 7, **dadurch gekennzeichnet, dass** ein erkanntes Symbol einen Gestenbefehl auslöst.

## Claims

1. A method for operating a robot arm, comprising the following method steps:
detecting a user's input, which the user applies to the surface of the robot arm in the form of a symbol, by the following steps:
detecting a force and/or a torque in at least one joint by force and/or torque sensors that are anyway included in the robot joint, wherein the force and/or the torque is generated by the user's input,
deriving a trajectory of the point of contact on the three-dimensional surface of the robot arm,
transforming the three-dimensional trajectory of the point of contact into a two-dimensional trajectory,
deriving a symbol from the two-dimensional trajectory,
deriving an input command for the robot arm from one or more symbols.

2. The method for operating a robot arm according to claim 1, **characterized in that**, when deriving the trajectory of the point of contact on the three-dimensional surface, the surface structure and/or the structure of the robot arm is considered.

3. The method for operating a robot arm according to claim 1 or 2, **characterized in that** a global map of the surface of the robot arm is generated, which includes a mapping of the three-dimensional surface of the robot arm onto a two-dimensional surface.

4. The method for operating a robot arm according to any one of claims 1 to 3, **characterized in that** the detected forces and/or torques are filtered for generating a uniform trajectory.

5. The method for operating a robot arm according to any one of claims 1 to 4, **characterized in that** the three-dimensional trajectory is approximated section by section using splines or Bezier curves.

6. The method for operating a robot arm according to any one of claims 1 to 5, **characterized in that** the transfer of the three-dimensional trajectory of the point of contact into a two-dimensional trajectory comprises a non-linear dimensionality reduction and in particular manifold learning.

7. The method for operating a robot arm according to any one of claims 1 to 6, **characterized in that** the symbol is detected by using an artificial neural network, in particular a convolutional neutral network or a recurrent neural network.

8. The method for operating a robot arm according to any one of claims 1 to 7, **characterized in that** a detected symbol triggers a gesture command.

## Revendications

1. Procédé destiné à faire fonctionner un bras robotisé, avec les étapes suivantes :
de détection d'une entrée d'utilisateur que celui-ci appose sous forme d'un symbole sur la surface du bras robotisé par les étapes suivantes :
de détection d'une force et/ou d'un couple de rotation dans au moins une articulation par des capteurs de force et/ou de couple de rotation, qui sont présents de toute façon dans l'articulation de robot, dans lequel la force et/ou le couple de rotation sont provoqués par l'entrée de l'utilisateur,
de déduction d'une trajectoire du point de contact sur la surface tridimensionnelle du bras robotisé,
de conversion de la trajectoire tridimensionnelle du point de contact en une trajectoire bidimensionnelle,
de déduction d'un symbole à partir de la trajectoire bidimensionnelle,
de déduction d'une commande d'entrée pour le bras robotisé à partir d'un ou de plusieurs symboles.

2. Procédé destiné à faire fonctionner un bras robotisé selon la revendication 1, **caractérisé en ce que** la structure de surface et/ou la structure du bras robotisé sont prises en compte lors de la déduction de la trajectoire du point de contact sur la surface tridimensionnelle.

3. Procédé destiné à faire fonctionner un bras robotisé selon la revendication 1 ou 2, **caractérisé en ce qu'**une carte globale de la surface du bras robotisé est générée, qui contient une représentation de la surface tridimensionnelle du bras robotisé sur une surface bidimensionnelle.

4. Procédé destiné à faire fonctionner un bras robotisé selon l'une quelconque des revendications 1 à 3, **caractérisé en ce que** les forces et/ou couples de rotation détectés sont filtrés pour générer une trajectoire régulière.

5. Procédé destiné à faire fonctionner un bras robotisé selon l'une quelconque des revendications 1 à 4, **caractérisé en ce qu'**un rapprochement par endroits de la trajectoire tridimensionnelle s'effectue en utilisant des splines ou des courbes de Bézier.

6. Procédé destiné à faire fonctionner un bras robotisé selon l'une quelconque des revendications 1 à 5, **caractérisé en ce que** la conversion de la trajectoire tridimensionnelle du point de contact en une trajectoire bidimensionnelle comprend une réduction dimensionnelle non linéaire et en particulier un apprentissage de collecteur.

7. Procédé destiné à faire fonctionner un bras robotisé selon l'une quelconque des revendications 1 à 6, **caractérisé en ce que** l'identification du symbole s'effectue en utilisant un réseau neuronal artificiel, en particulier d'un réseau neuronal convolutif ou un réseau neuronal récurrent.

8. Procédé destiné à faire fonctionner un bras robotisé selon l'une quelconque des revendications 1 à 7, **caractérisé en ce qu'**un symbole identifié déclenche une commande gestuelle.
